# EUROPÄISCHE PATENTSCHRIFT

(11) **EP 1 724 213 B1**
(45) Veröffentlichungstag und Bekanntmachung des Hinweises auf die Patenterteilung: **24.12.2008**
(21) Anmeldenummer: 06010017.9
(22) Anmeldetag: 16.05.2006
(51) Int. Cl.: B65D 88/16

(54) **Flexibler Behälter**
Flexible container
Récipient souple

(30) Priorität: 20.05.2005 DE 102005023253
(43) Veröffentlichungstag der Anmeldung: 22.11.2006
(73) Patentinhaber: Nordenia Deutschland Emsdetten GmbH, 48282 Emsdetten (DE)
(72) Erfinder: Hartmann, Siegfried, 49477 Ibbenbüren (DE); Abelmann, Stefan, 48282 Emsdetten (DE)
(74) Vertreter: Pott, Ulrich

(56) Entgegenhaltungen:
- EP-A- 0 664 258
- EP-A- 1 300 345
- FR-A- 2 504 851
- US-A- 4 636 419
- US-A- 5 045 377

## Beschreibung

Die Erfindung bezieht sich auf einen flexibeln Behälter, beispielsweise einen flexiblen Schüttgutbehälter, mit einem einen Bodenbereich sowie Seitenwände umfassenden Behälterkörper aus beispielsweise Mono- und/oder Multifilamenten, wobei in Eckbereichen aneinandergrenzende Seitenwände über Stabilisierungselemente miteinander verbunden sind, und wobei Stabilisierungselemente Durchlässe für das Füllgut aufweisen.

Ein derartiger flexibler Behälter ist beispielsweise aus der EP 1 300 345 A1 bekannt. Bei diesem flexiblen Behälter bestehen die Stabilisierungsteile aus Querstreifen, die ihrerseits aus Filamenten hergestellt sind. Nachteilig sind Verunreinigungen durch Filamentfasern. Zwischen den einzelnen Querstreifen sind Leerräume als Durchlässe vorgesehen. Die entsprechenden Querstreifen sind über einen Vertikalstreifen mit benachbarten Seitenwänden des Behälterkörpers vernäht. Durch die Durchlässe kann eingefülltes Material auch in die durch die Querstreifen abgegrenzten Eckbereiche des Behälters eindringen, so daß auch in diesen Bereichen der Füllraum zu nutzen ist. Diese Stabilisierungselemente dienen insbesondere dazu, ein Ausbauchen von Seitenwänden gering zu halten bzw. gänzlich zu verhindern.

Nachteilig bei solchen aus Gewebequerstreifen bestehenden Stabilisierungselementen ist, daß diese zum einen relativ hoch belastbar sein müssen, darüber hinaus jedoch nicht abriebfest sind, obgleich sie mit dem Füllgut unmittelbar in Berührung kommen. Das macht sie wenig geeignet, um z.B. in flexiblen Behältern eingesetzt zu werden, in denen Farben, Lacke oder z.B. Lebensmittel bevorratet und transportiert werden sollen.

Es ist Aufgabe der vorliegenden Erfindung, einen flexiblen Behälter der eingangs genannten Art zur Verfügung zu stellen, der einerseits mit Stabilisierungselementen ausgerüstet sein kann, der jedoch darüber hinaus in der Lage ist, sensible Füllgüter wie Lebensmittel, Farben, Lacke u.dgl. aufzunehmen.

Zur Lösung dieser Aufgabe zeichnet sich der flexible Behälter der eingangs genannten Art dadurch aus, daß die Stabilisierungselemente als Gitternetzbahn aus einem extrudierten Kunststoffmaterial ausgebildet sind und daß in Längsrichtung der Gitternetzbahn ausgerichtete Längsstege dicker ausgebildet sind als quer zu diesen ausgerichtete Querstege.

Aus der US-A-5 045 377 ist zwar ein Fließpressen von Gitternetzbahnen als Technologie bekannt, die für eine sehr große Strecke von unterschiedlichen Gitternetzbahnen verwendet werden kann. Zu dem ist aus der EP-A-0 664 258 bekannt, Stabilisierungselemente aus einem extrudierten Kunststoffmaterial bei dem Schüttgutbehälter zu verwenden. Nicht bekannt ist jedoch, bei Verwendung einer Gitternetzbahn aus einem extrudierten Kunststoffmaterial in Längserstreckung der Gitternetzbahn ausgerichtete Längsstege dicker auszubilden als quer zu diesen ausgerichtete Querstege, womit ein flexibler Schüttgutbehälter zur Verfügung gestellt werden kann, bei dem die unmittelbar mit dem Füllgut in Berührung kommenden Stabilisierungselemente hoch abriebfest und absolut sauber ausgebildet sind. Dadurch ist sichergestellt, daß sich im Bereich der Stabilisierungselemente nicht Partikel der Gitternetzbahn ablösen und das Füllgut verunreinigen. Die Gitternetzstruktur entsteht damit schon bei der Extrusion, so daß ein nachfolgender Webvorgang entbehrlich ist.

Das Material aus dem extrudierten Kunststoff ist mit geringem Herstellungsaufwand zu der Gitternetzbahn zu verarbeiten und kann im übrigen auch mit den Behälterwänden vernäht bzw. verschweißt werden. Durch die Durchlässe innerhalb der Gitternetzbahn kann Füllgut in die Eckbereiche des Behälterkörpers eindringen, so daß der Füllgutraum des flexiblen Behälters nahezu vollständig genutzt werden kann. Ein Ausbauchen des Behälterkörpers erfolgt jedoch nicht, da die Gitternetzbahn die jeweiligen Seitenwände voll stabilisiert. Da die Gitternetzbahn so ausgebildet ist, daß die in ihrer Längsrichtung verlaufenden Stege, also die Längsstege, dicker ausgebildet sind als die quer zu diesen ausgerichteten Querstegen, ergibt sich ein optimiertes Stabilitätsverhalten bei optimiertem Materialbedarf. Es ist selbstverständlich auch möglich, die jeweiligen Stege in Diagonalausrichtung vorzusehen.

Die Gitternetzbahn hat bevorzugterweise eine derartige Struktur bzw. einen derartigen Aufbau, daß in Kreuzungs- bzw. Knotenpunkten von Quer-, Längs- bzw. Diagonalstegen eine erhöhte Materialanhäufung von extrudiertem Kunststoffmaterial vorliegt. Diese Materialanhäufung kann sich dadurch ergeben, daß Stege übereinanderliegen, so daß die annähernd doppelte Materialdicke in diesen Bereichen zu der Materialanhäufung führt. Des weiteren kann es allerdings auch sein, daß man Kreuzungs- bzw. Knotenpunkte derart miteinander verbindet, daß keine exakt winkligen Übergänge vorhanden sind, sondern z.B. abgerundete Bereiche, mittels denen eine erhöhte Belastbarkeit dargestellt werden kann, da im Kreuzungsbereich Ecken ausgefüllt sind.. Die Gitternetzbahn kann aus Polypropylen oder beispielsweise auch aus Polyethylen bestehen.

Hinsichtlich wesentlicher weiterer Ausgestaltungen wird auf weitere Unteransprüche, die nachfolgende Beschreibung und die Zeichnung verwiesen. In der Zeichnung zeigen:

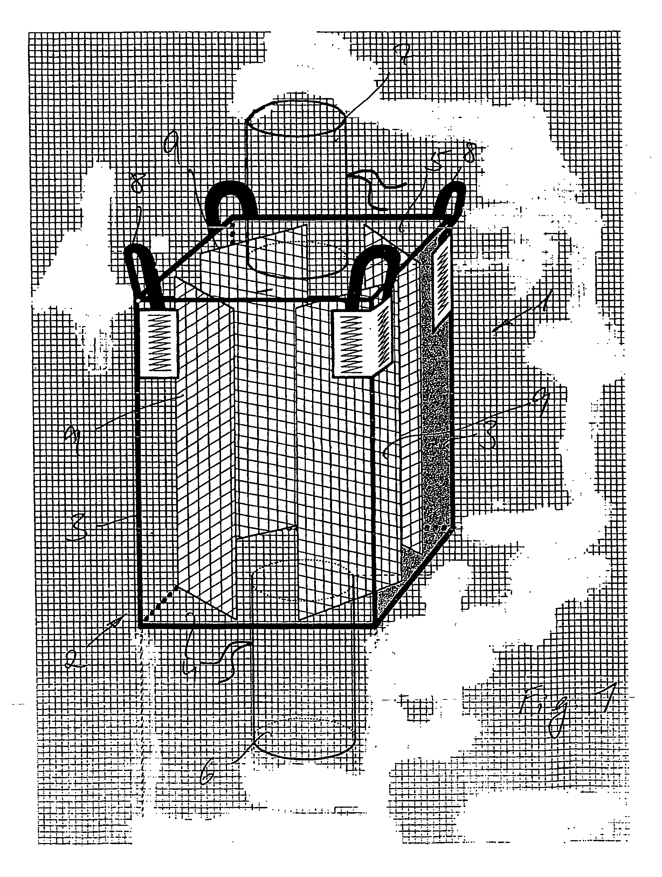

- Fig. 1: eine perspektivische Darstellung eines Ausführungsbeispiels eines flexiblen Behälters nach der Erfindung, und
- Fig. 2: ausschnittsweise ein Ausführungsbeispiel einer Gitternetzbahn.

In der Zeichnung sind nur die zum unmittelbaren Verständnis der Erfindung notwendigen Teile des Ausführungsbeispiels des flexiblen Behälters dargestellt. Der allgemein mit 1 bezifferte Behälter hat einen Behälterkörper 2 mit Seitenwänden 3, einen Boden 4 und einen Deckelbereich 5. Im Bodenbereich 4 ist ein Auslaufstutzen 6 und im Deckelbereich 5 ein Füllstutzen 7 vorgesehen. Über mit den Seitenwänden 3 vernähte Tragschlaufe 8 ist der Behälter 1 anzuheben. In den Eckbereichen sind allgemein mit 9 bezifferte Stabilisierungselemente vorgesehen. Diese erstrecken sich vom Behälterboden 4 längs nach oben hin zum Behälterdeckel und enden dort mit einem Abstandsmaß zum Deckelbereich 5. Die Stabilisierungselemente 9 sind als Gitternetzbahn ausgebildet, die mit den Behälterseitenwänden vernäht ist. In dem Bereich der jeweiligen Stichlöcher kann jeweils ein Schlauchdichtband vorgesehen sein.

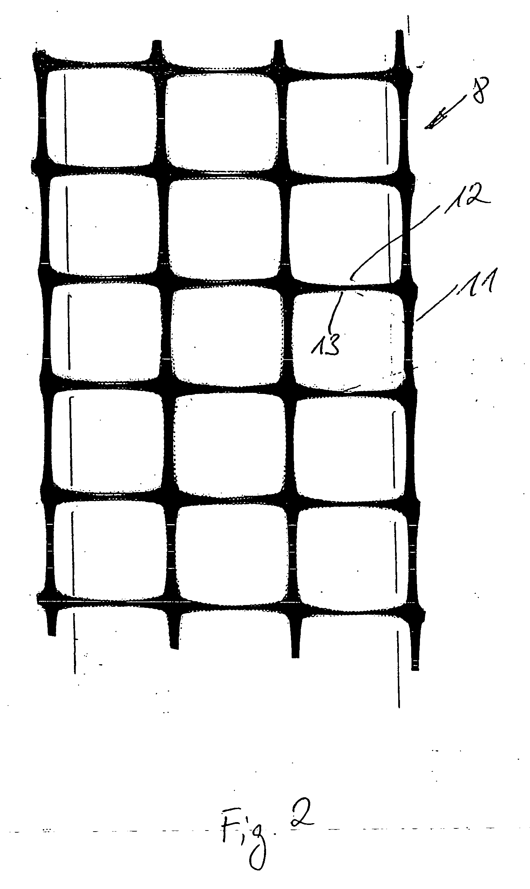

Die Gitternetzbahn als jeweiliges Stabilisierungselement 9 besteht aus einem extrudierten Kunststoffmaterial, wobei die Gitternetzbahn so hergestellt ist, daß im jeweiligen Kreuzungs- bzw. Knotenbereich von Längsstegen 11 und Querstegen 12 eine derartige Materialanhäufung vorliegt, daß sich hier keine exakt winkligen Eckbereiche mehr ergeben, sondern in diesen Knotenbereichen sich ein größerer Anteil an Kunststoffmaterial ergibt, wohingegen im mittleren Bereich, z.B. angedeutet bei 13 in Fig. 2, ein relativ schmaler Stegbereich vorliegt. Insgesamt sind die Längsstege 11 auch dicker ausgebildet als die Querstege 12, womit sich ein optimiertes Stabilitätsverhalten bei optimiertem Materialbedarf ergibt. Durch die Verwendung des extrudierten Kunststoffmaterials sind die Stabilisierungselemente partikelfrei ausgebildet bzw. als hoch abriebfest zu bezeichnen, so daß diese auch bei Verwendung des Behälters als Bevorratungs- und Transportmittel für Lebensmittel, Farben, Lacke u.dgl. nicht die Gefahr in sich bergen, daß aufgrund eines Abriebes eine Verunreinigung des Füllgutes stattfindet.

Ansonsten kann der flexible Behälter in bekannter Weise z.B. elektrostatisch ableitfähig und/oder beschichtet ausgebildet sein und/oder mit einem Inliner verstehen werden, wobei auch die entsprechenden Stabilisierungselemente in einem Inliner vorgesehen werden können.

## Patentansprüche

1. Flexibler Schüttbehälter (1), beispielsweise flexibler Schüttgutbehälter, mit einem einen Bodenbereich (4) sowie Seitenwände (3) umfassenden Behälterkörper (2) aus beispielsweise Mono- und/oder Multifilamenten, wobei in Eckbereichen aneinandergrenzende Seitenwände (3) über Stabilisierungselemente (9) miteinander verbindbar sind, wobei die Stabilisierungselemente (9) Durchlässe für das Füllgut aufweisen, **dadurch gekennzeichnet, daß** die Stabilisierungselemente (9) als Gitternetzbahn aus einem extrudierten Kunststoffmaterial ausgebildet sind und daß in Längserstrekkung der Gitternetzbahn ausgerichtete Längsstege (11) dicker ausgebildet sind als quer zu diesen ausgerichtete Querstege (12).

2. Flexibler Behälter nach Anspruch 1, **dadurch gekennzeichnet, daß** in Kreuzungsbereichen von einander kreuzenden Stegen (11,12) der Gitternetzbahn das Gitternetz eine erhöhte Materialanhäufung aufweist als in außerhalb der Kreuzungsstellen gelegenen Bereichen der Gitternetzbahn.

3. Flexibler Behälter nach einem der Ansprüche 1 bis 2, **dadurch gekennzeichnet, daß** Einnähbereiche der Gitternetzbahn stärker ausgebildet sind als zwischen Randbereichen gelegene Bereiche der Gitternetzbahn.

4. Flexibler Behälter nach einem der Ansprüche 1 bis 3, **dadurch gekennzeichnet, daß** die Gitternetzbahn mit einer Seitenwandung (3) des Behälterkörpers (2) vernäht oder verschweißt ist.

5. Flexibler Behälter nach einem der Ansprüche 1 bis 3, **dadurch gekennzeichnet, daß** die Gitternetzbahn mit einer Seitenwandung (3) des Behälterkörpers (2) verschweißt ist.

6. Flexibler Behälter nach einem der Ansprüche 1 bis 5, **dadurch gekennzeichnet, daß** die Gitternetzbahn aus einem Kunststoffolienmaterial besteht.

7. Flexibler Behälter nach einem der Ansprüche 1 bis 6, **dadurch gekennzeichnet, daß** die Gitternetzbahn aus Polypropylen besteht.

8. Flexibler Behälter nach einem der Ansprüche 1 bis 7, **dadurch gekennzeichnet, daß** die Gitternetzbahn aus Polyethylen besteht.

9. Flexibler Behälter nach einem der Ansprüche 1 bis 8, **dadurch gekennzeichnet, daß** in Kreuzungsbereichen von Längs- (11) und Querstegen (12) der Gitternetzbahn eine Materialanhäufung durch nebeneinander und/oder übereinander befindliches Kunststoffmaterial gebildet ist.

## Claims

1. Flexible bulk container (1), such for example as a flexible container for bulk material, having a body (2) made for example of monofilaments and/or multifilaments which comprises a bottom region (4) and side-walls (3), side-walls (3) which adjoin one another in lateral regions being able to be connected together by means of shape-maintaining members (9), the shape-maintaining members (9) having through-openings for the contained material, **characterised in that** the shape-maintaining members (9) take the form of webs of grid-like net material made of an extruded plastics material and **in that** longitudinal cross-limbs (11) aligned in the longitudinal direction of the web of grid-like net material are of a thicker form than transverse cross-limbs (12) aligned transversely to the longitudinal cross-limbs (11).

2. Flexible container according to claim 1, **characterised in that**, in regions where intersecting cross-limbs (11,12) of the web of grid-like net material intersect, the grid-like net material has a larger concentration of material than in regions of the web of grid-like net material situated away from the points of intersection.

3. Flexible container according to either of claims 1 and 2, **characterised in that** regions where the web of grid-like net material is sewn on are of a thicker form than regions of the web of grid-like net material situated between its edge regions.

4. Flexible container according to one of claims 1 to 3, **characterised in that** the web of grid-like net material is sewn or welded to a side-wall (3) of the body (2) of the container.

5. Flexible container according to one of claims 1 to 3, **characterised in that** the web of grid-like net material is welded to a side-wall (3) of the body (2) of the container.

6. Flexible container according to one of claims 1 to 5, **characterised in that** the web of grid-like net material is composed of a plastics film material.

7. Flexible container according to one of claims 1 to 6, **characterised in that** the web of grid-like net material is composed of polypropylene.

8. Flexible container according to one of claims 1 to 7, **characterised in that** the web of grid-like net material is composed of polyethylene.

9. Flexible container according to one of claims 1 to 8, **characterised in that**, in the regions where longitudinal (11) and transverse (12) cross-limbs of the web of grid-like net material intersect, a concentration of material is formed by plastics materials which are situated one beside another and/or one above another.

## Revendications

1. Récipient flexible basculant (1), par exemple récipient flexible pour produits en vrac, comprenant un corps de récipient (2) comportant une zone de fond (4) ainsi que des parois latérales (3) constitué par exemple de monofilaments et/ou de multifilaments, les parois latérales (3) adjacentes dans les zones de coin pouvant être reliées les unes aux autres par des éléments de stabilisation (9), les éléments de stabilisation (9) comprenant des passages pour le produit de remplissage, **caractérisé en ce que** les éléments de stabilisation (9) sont réalisés comme une bande quadrillée fabriquée à partir d'une matière plastique extrudée et **en ce que** les nervures longitudinales (11) orientées dans l'extension longitudinale de la bande quadrillée sont réalisées de façon plus épaisse que les nervures transversales (12) orientées transversalement à celles-ci.

2. Récipient flexible selon la revendication 1, **caractérisé en ce que** le quadrillage comprend dans les zones de croisement de nervures se croisant (11, 12) de la bande quadrillée une accumulation de matériau supérieure à celle dans les zones de la bande quadrillée placées à l'extérieur des points de croisement.

3. Récipient flexible selon l'une quelconque des revendications 1 à 2, **caractérisé en ce que** les zones ourlées à points rabattus de la bande sont réalisées de façon plus épaisse que les zones de la bande quadrillée placées entre les zones de bord.

4. Récipient flexible selon l'une quelconque des revendications 1 à 3, **caractérisé en ce que** la bande quadrillée est cousue ou soudée à une paroi latérale (3) du corps de récipient (2).

5. Récipient flexible selon l'une quelconque des revendications 1 à 3, **caractérisé en ce que** la bande quadrillée est soudée à une paroi latérale (3) du corps de récipient (2).

6. Récipient flexible selon l'une quelconque des revendications 1 à 5, **caractérisé en ce que** la bande quadrillée est constituée d'un matériau en feuille de matière plastique.

7. Récipient flexible selon l'une quelconque des revendications 1 à 6, **caractérisé en ce que** la bande quadrillée est constituée de polypropylène.

8. Récipient flexible selon l'une quelconque des revendications 1 à 7, **caractérisé en ce que** la bande quadrillée est constituée de polyéthylène.

9. Récipient flexible selon l'une quelconque des revendications 1 à 8, **caractérisé en ce qu'**une accumulation de matériau est formée par une matière plastique située de façon juxtaposée et/ou superposée dans les zones de croisement des nervures longitudinales (11) et transversales (12) de la bande quadrillée.
